(19) Europäisches Patentamt

European Patent Office

Office européen des brevets

(11) Veröffentlichungsnummer: **0 512 418 B1**

(12) **EUROPÄISCHE PATENTSCHRIFT**

(45) Veröffentlichungstag der Patentschrift: **12.07.95**

(21) Anmeldenummer: **92107400.1**

(22) Anmeldetag: **30.04.92**

(51) Int. Cl.⁶: **C08G 77/06**, C09D 183/04, C08J 3/02, C08G 77/08

(54) **Verfahren zur Herstellung von Beschichtungen auf Siliconharzbasis.**

(30) Priorität: **03.05.91 DE 4114517**
     **30.08.91 DE 4128893**

(43) Veröffentlichungstag der Anmeldung:
   **11.11.92 Patentblatt 92/46**

(45) Bekanntmachung des Hinweises auf die
   Patenterteilung:
   **12.07.95 Patentblatt 95/28**

(84) Benannte Vertragsstaaten:
   **AT BE CH DE ES FR GB IT LI NL SE**

(56) Entgegenhaltungen:
   EP-A- 291 213          EP-A- 367 696
   EP-A- 382 365          EP-A- 0 157 323
   EP-A- 0 263 431        DE-A- 3 628 048
   US-A- 3 503 925        US-A- 3 642 693

   PATENT ABSTRACTS OF JAPAN vol. 9, no.
   233 (C-304)(1956) 19. September 1985 ; &
   JP-A-60092351

   W. Noll, "Chemie und Technologie der Silicone", Verlag Chemie GmbH, Weinheim
   1968, Seiten 485/6

(73) Patentinhaber: **WACKER-CHEMIE GMBH**
   **Hanns-Seidel-Platz 4**
   **D-81737 München (DE)**

(72) Erfinder: **Weidner, Richard, Dr.**
   **Lindacherstrasse 69**
   **W-8268 Burghausen (DE)**
   Erfinder: **Bildl, Erich**
   **Holzöster 46**
   **A-5131 Franking (AT)**
   Erfinder: **Frey, Volker, Dr.**
   **Jahnweg 5**
   **W-8263 Burghausen (DE)**
   Erfinder: **Meisenberger, Manfred**
   **Tittmoningerstrasse 3a**
   **W-8263 Burghausen (DE)**
   Erfinder: **Müller, Reinhardt, Dr.**
   **Karl-Gros-Strasse 12**
   **W-8263 Burghausen (DE)**

**Beschreibung**

Die vorliegende Erfindung betrifft ein Verfahren zur Herstellung lagerstabiler Beschichtungsmittel auf Siliconharzbasis.

**Stand der Technik**

In der US-A-3 503 925 (P.A. Griffin; ausgegeben am 31. 3. 1970 für Midland Silicones Ltd., GB) ist ein Verfahren zur Herstellung eines vernetzbaren Organopolysiloxanharzes beschrieben, das von einem Organopolysiloxanharz ausgeht, welches weniger als 0,25 Gewichtsprozent Silanolgruppen aufweist. Dieses Organopolysiloxanharz wird mit einem wasserfreien quarternären Ammoniumsilanolat oder Phosphoniumsilanolat als Kondensationskatalysator vermischt. Diese Mischung neigt aufgrund des niedrigen Silanolgruppengehalts des Organopolysiloxanharzes nicht zum gelieren und ist deshalb lagerfähig. Vernetztes Organopolysiloxanharz erhält man durch Erhitzen der Mischung auf über 50 °C auf dem Substrat.

In US-A-2 986 549 (J.R. McLoughlin et al.; ausgegeben am 30. 5. 1961 für General Electric Co., USA) sind Beschichtungsmittel auf der Grundlage von Siliconharzen beschrieben. Diese Harze werden u.a. durch Hydrolyse und Kondensation von Phenyltrichlorsilan und Dimethyldichlorsilan hergestellt und mit Tetramethylammoniumhydroxid als Kondensationskatalysator und zwei bis fünf Mol Essigsäure pro Mol eingesetztem Tetramethylammoniumhydroxid zu einem Beschichtungsmittel vermischt. Die Essigsäure dient als Stabilisator für die Lagerung des Beschichtungsmittels. Die eigentliche Beschichtung wird durch Erhitzen des Beschichtungsmittels auf dem Substrat gebildet. Dabei entweicht der Stabilisator und die Aushärtung wird ermöglicht.

Ähnliche Beschichtungsmittel sind in US-A-2 986 548 (J.R. McLoughlin et al.; ausgegeben am 30. 5. 1961 für General Electric Co., USA) beschrieben. Dort muss jedoch der alkalische Kondensationskatalysator nicht vollständig durch Säure neutralisiert werden, sofern eine α-halogenierte Carbonsäure, wie Trichloressigsäure, in Mengen von mindestens 0,25 Mol pro Mol des alkalischen Kondensationskatalysators zugesetzt wird.

In EP-A-367 696 ist die Herstellung von $\alpha,\omega$-bis(Dimethoxy)polymethylsiloxan aus $\alpha,\omega$-Dihydroxypolymethylsiloxan und Methyltrimethoxysilan in Gegenwart einer Lösung von $LiOH,H_2O$ in Methanol beschrieben. Die Eignung derartiger Siloxane als Beschichtungsmittel ist in W. Noll, 2. Auflage 1968, Verlag Chemie, Weinheim beschrieben.

In US-A-3 642 693 ist die Herstellung von festen Prepolymeren aus Phenyltriethoxysilan und gegebenenfalls Methyltriethoxysilan in Gegenwart einer Calciumhydroxidlösung beschrieben. Die Prepolymere sind als Beschichtungsmittel einsetzbar.

In EP-A-382 365 ist die Herstellung von Organosiliciumkondensationsprodukten aus Alkoxygruppen aufweisenden Organosiliciumverbindungen in Gegenwart von Barium- oder Strontiumhydroxid beschrieben. In EP-A-382 366 ist die Herstellung von Organosiliciumkondensationsprodukten aus Hydroxylgruppen aufweisenden Organosiliciumverbindungen in Gegenwart von Erdalkalihydroxid beschrieben. Auch ist die Eignung von Tetramethylammoniumhydroxid als basischer Äquilibrierungskatalysator erwähnt.

In EP-A-291 213 ist die Herstellung von Organopolysiloxan-Microemulsionen unter Verwendung von quarternären Ammoniumhydroxiden beschrieben.

Es war Aufgabe der vorliegenden Erfindung, lagerstabile Beschichtungsmittel bzw. Bindemittel hierfür herzustellen. Es war auch Aufgabe der vorliegenden Erfindung, Bindemittel herzustellen, die schon bei Raumtemperatur in kurzer Zeit zu klebfreien Filmen physikalisch trocknen oder vernetzen. Ferner war es Aufgabe der vorliegenden Erfindung, Beschichtungsmassen herzustellen, die auch für Beschichtungen geeignet sind, die hohen Temperaturen ausgesetzt sind. Desgleichen war es Aufgabe der vorliegenden Erfindung, Beschichtungsmittel bereitzustellen, die sich für Einbrennlackierungen eignen.

Die vorstehenden Aufgaben werden durch die vorliegende Erfindung gelöst durch ein Verfahren zur Herstellung von Beschichtungsmitteln, bei dem eine Mischung von

(A) mindestens einem Siliconharz der Formel

$$R_x(OR')_ySiO_{(4-x-y)/2} \qquad (1),$$

worin bedeuten

    **R**    gleiche oder verschiedene, gegebenenfalls substituierte $C_1$- bis $C_{18}$-Kohlenwasserstoffreste,

    **R'**    gleiche oder verschiedene $C_1$- bis $C_4$-Alkylreste oder Wasserstoffatome,

    **x**    durchschnittlich einen Wert von 1,1 bis 1,9 und die Summe von **x + y** maximal einen Wert von 2,5, und/oder

EP 0 512 418 B1

mindestens einem Silan der Formel

$$R_aSi(OR')_{(4-a)} \qquad (2),$$

wobei **R** und **R'** die vorstehend angegebenen Bedeutungen haben und

**a** durchschnittlich einen Wert von 1,1 bis 1,9 besitzt,

wobei in den Formeln (1) und (2) mindestens 30 Prozent der Reste **R** Phenylreste und/oder Tolylreste sind,

(B) Tetra($C_1$- bis $C_{12}$-kohlenwasserstoff)ammoniumhydroxid und/oder Tetra($C_1$- bis $C_{12}$-kohlenwasserstoff)phosphonium-hydroxid und/oder deren Silanolate, in einer Gesamtmenge von $2 \times 10^{-3}$ Mol bis 0,5 Mol pro kg der Komponente (A) als basischer Kondensationskatalysator,

(D) organischem Lösungsmittel und

gegebenenfalls (C) Wasser

umgesetzt wird,

wobei der Anfangsgehalt der Mischung an Silanolgruppen mindestens 0,3 Gew.-% des Gewichts der Komponente (A) beträgt oder Komponente (A) neben gegebenenfalls vorhandenen Silanolgruppen mindestens so viele an Si-gebundene Alkoxygruppen aufweist, daß zu Beginn der Umsetzung in der Mischung durch Reaktion mit Wasser ein Gehalt an Silanolgruppen erreicht wird, der mindestens 0,3 Gew.-% der Komponente (A) entspricht, wobei das bei der Umsetzung entstehende Alkanol entfernt wird und wobei die Beschichtungsmittel frei von Carbonsäuren und deren Salzen sind.

Der Begriff "eine dieser Mischung Basizität verleihende Menge an basischem Kondensationskatalysator" bedeutet hier, daß die Menge an Base während der erfindungsgemäßen Herstellung von Beschichtungsmitteln nicht völlig durch Säure neutralisiert wird.

Das erfindungsgemäße Verfahren ermöglicht die Herstellung von Beschichtungsmitteln ausgehend von verschiedenenartigen als Komponente (A) bezeichneten Siliconharzen und Silanen in einem einzigen Verfahrensschritt.

Die Umsetzung wird so geführt, daß sich am Ende des Herstellungsverfahrens ein thermodynamischer Gleichgewichtszustand in der Mischung der Komponenten einstellt. Deshalb sind die durch das erfindungsgemäße Verfahren erhaltenen Beschichtungsmittel bereits stabil und benötigen keinen Stabilisator, der zur Herstellung einer Beschichtung desaktiviert oder entfernt werden muß. Das bei bekannten Verfahren notwendige Isolieren eines festen Harzes oder Zugabe eines Stabilisators entfällt.

Der Anfangsgehalt der Mischung an Silanolgruppen oder Si-gebundenen Alkoxygruppen und Wasser ist für die Kondensationsreaktion der Komponenten zu den Beschichtungsmitteln erforderlich. Bei der Umsetzung werden aus Alkoxygruppen mit Wasser Silanolgruppen gebildet. Die Komponente (A) soll aber frei von ebenfalls kondensationsfähigen Si-gebundenen Halogenatomen sein, da solche Gruppen den basischen Kondensationskatalysator desaktivieren.

Vorzugsweise enthalten die im erfindungsgemäßen Verfahren eingesetzten Mischungen von $5 \cdot 10^{-3}$ Mol bis 0,1 Mol an Base pro kg der Komponente (A).

Vorzugsweise wird die Mischung nach der Umsetzung zu einer Lösung, Emulsion oder Dispersion verarbeitet und so als Beschichtungsmittel eingesetzt. Lösungen sind hierbei insbesondere Lösungen in organischen Lösungsmitteln, Emulsionen und Dispersionen, insbesondere wässerige Emulsionen und Dispersionen. Zu Emulsionen können feste Harze in Lösungsmitteln gelöst oder flüssige Harze verarbeitet werden.

Wenn als Emulgatoren quaternäre Alkylammoniumsalze oder Alkylbenzolammoniumsalze eingesetzt werden, kommen die Halogenide, Sulfate und Acetate der quaternären Ammoniumsalze zum Einsatz.

Beispiele für Reste R in der Formel (1) und in der Formel (2) sind Alkylreste, wie der Methyl-, Ethyl-, n-Propyl-, iso-Propyl-, n-Butyl-, iso-Butyl-, sec.-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Oktylreste, wie der n-Octylrest und iso-Oktylreste, wie der 2,2,4-Trimethylpentylrest; Nonylreste, wie der n-Nonylrest; Decylreste, wie der n-Decylrest; Dodecylreste, wie der n-Dodecylrest; Oktadecylreste, wie der n-Oktadecylrest; Alkenylreste, wie der Vinyl- und der Allylrest; Cycloalkylreste, wie Cyclopentyl-, Cyclo hexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste; Xylylreste und Ethylphenylreste; Aralkylreste, wie der Benzylrest, der alpha- und der $\beta$-Phenylethylrest.

Beispiele für substituierte Reste **R** sind Cyanalkylreste, wie der $\beta$-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest; Aminoalkylreste, wie der 3-Aminopropyl- der N-(Cyclohexyl)-3-aminopropylrest und der N-(2-Aminoethyl)-3-aminopropylrest; esterfunktionelle Reste, wie der Acryloxypropyl- und der Methacryloxypropylrest; epoxyfunktionelle Reste, wie der Glycidoxypropylrest sowie mercaptofunktionelle Reste, wie der Mercaptopropylrest.

Als Reste **R** sind unsubstituierte Kohlenwasserstoffreste bevorzugt, insbesondere solche mit 1 bis 8 Kohlenstoffatomen, speziell Methyl-, Ethyl-, Vinyl-, Tolyl- und Phenylreste.

Beispiele für Reste **R'** in den Formeln (1) und (2) sind Wasserstoffatome, Methyl-, Ethyl-, n-Propyl-, iso-Propyl-, n-Butyl-, sec.-Butyl-, iso-Butyl- und tert.-Butylreste.

Der Index **x** hat vorzugsweise einen Wert von 1,1 bis 1,8, insbesondere von 1,1 bis 1,7.

Der Index **y** hat vorzugsweise einen Wert von 0,1 bis 1,8, insbesondere von 0,25 bis 1.

Die im erfindungsgemäßen Verfahren hergestellten Beschichtungsmittel enthalten vorzugsweise von 5 Gew.% bis 90 Gew.%, insbesondere von 30 Gew.% bis 80 Gew.% an Komponente (A), jeweils bezogen auf das Gesamtgewicht aller Komponenten einschließlich der Lösungsmittel und Wasser.

Insbesondere sind mindestens 20 Prozent, vorzugsweise mindestens 30 Prozent, der Reste **R** Phenylreste.

Im erfindungsgemäßen Verfahren wird als Komponente (B) basischer Kondensationskatalysator eingesetzt, nämlich Tetra($C_1$- bis $C_{12}$-kohlenwasserstoff)ammoniumhydroxide und/oder Tetra($C_1$- bis $C_{12}$-kohlenwasserstoff)phosphoniumhydroxide und/oder deren Silanolate, wobei die Kohlenwasserstoffreste insbesondere Alkyl-, Aryl-, Alkaryl- und Aralkylreste sind. Diese Silanolate werden hergestellt durch Umsetzung der quarternären Ammonium- und Phosphoniumhydroxide mit Organosilanen oder Organosiloxanen.

Besonders bevorzugt ist Benzyltrimethylammoniumhydroxid, welches bei 0,1 MPa und 130°C sich in Benzylalkohol und gasförmiges Trimethylamin zersetzt. Ebenfalls bevorzugt ist Tetramethylammoniumhydroxid.

Ebenfalls besonders bevorzugt ist Tetra-n-butyl-phosphoniumhydroxid, welches sich bei 0,1 MPa und 150°C zu Tri-n-butylphosphinoxid und Butan zersetzt, wobei letzteres gasförmig entweichen kann.

Die nach dem erfindungsgemäßen Verfahren hergestellten Beschichtungsmittel, insbesondere Lösungen, Emulsionen und Dispersionen können Pigmente enthalten. Als Pigmente können hierbei alle Pigmente eingesetzt werden, die auch bisher in Beschichtungsmitteln, wie in Lacken, eingesetzt worden sind. Beispiele für solche Pigmente sind anorganische Pigmente, wie $CoAl_2O_4$, Kobaltsilikat, Ultramarin, Eisenoxide, Titandioxid, Siliciumcarbid, Ruß und Metallpigmente, sowie organische Pigmente.

Als Pigmente sind Eisenoxide, Ruß oder Metallpigmente, insbesondere Aluminium und Zink, bevorzugt.

Die Beschichtungsmittel enthalten vorzugsweise Pigmente, insbesondere in Mengen von 1 bis 1000 Gewichtsprozent, speziell von 20 bis 500 Gewichtsprozent, jeweils bezogen auf das Gewicht der eingesetzten Komponente (A).

Die nach dem erfindungsgemäßen Verfahren hergestellten Beschichtungsmittel können weitere Stoffe enthalten. Beispiele für solche Zusatzstoffe sind Fungizide, Bakterizide, Verlaufmittel, Weichmacher, Verdikkungsmittel und Mattierungsmittel. Die Zusatzstoffe werden vorzugsweise nach der Umsetzung der Mischung der Komponenten (A) bis (D) in die Beschichtungsmittel gemischt.

Die nach dem erfindungsgemäßen Verfahren hergestellten Beschichtungsmittel können auch durch weitere Polymere modifiziert sein. Beispiele für solche Polymere sind Epoxyd-Harze, Alkydharze, (Meth)-Acrylate, Polyester, Polyamide und Polyurethane.

## Beschichtungsmittellösungen

Die im erfindungsgemäßen Verfahren hergestellten Beschichtungsmittel können als Lösungen Feststoffgehalte von bis zu 90 Gewichtsprozent aufweisen. Im allgemeinen sind sie leicht auf Feststoffgehalte von bis zu 80 Gewichtsprozent einstellbar. Als in den Lösungen enthaltene Lösungsmittel oder Lösungsmittelgemische sind solche mit einem Siedepunkt bzw. Siedebereich von bis zu 200°C bei 0,1 MPa bevorzugt. Beispiele für solche Lösungsmittel sind Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon und Cyclohexanon; Schwefelkohlenstoff und Nitrobenzol, oder Gemische dieser Lösungsmittel.

Als Lösungsmittel sind Toluol, o-, m-, p- Xylol und deren Gemische bevorzugt.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

4

Die Lösungen enthalten sowohl vor als auch nach der Umsetzung der Mischung der Komponenten (A) bis (D) Lösungsmittel vorzugsweise von 5 Gewichtsprozent bis 1000 Gewichtsprozent, speziell von 10 Gewichtsprozent bis 500 Gewichtsprozent, jeweils bezogen auf das Gewicht der eingesetzten Komponente (A).

Die Lösungsmittel können vollständig oder teilweise vor oder nach der Umsetzung der Mischung der Komponenten (A) bis (D) zugesetzt werden. Die Lösungen können hergestellt werden durch Vermischung der Komponenten in beliebiger Reihenfolge. Sollen die Lösungen als solche oder als Teil der Komponente (A) ein Siliconharz enthalten, so können diese Lösungen auch dargestellt werden durch Vermischen von Silan oder Silangemischen der Formel (2) oder Teilhydrolysaten davon, mit Komponente (B) und dem Lösungsmittel, und Kondensieren des Silans, Silangemisches bzw. des Teilhydrolysats, vorzugsweise bei erhöhter Temperatur.

Vorzugsweise wird im Anschluß an den Kondensationsschritt ein Teil des Lösungsmittels aus dem Reaktionsgemisch entfernt. Vorzugsweise geschieht dies durch Destillation. Dabei wird auch gegebenenfalls als Kondensationsprodukt entstehendes Alkanol und Wasser mit abdestilliert. So erhält man ein lagerstabiles Beschichtungsmittel, das auch zu einer stabilen Emulsion oder Dispersion verarbeitet werden kann. Ist ein basischer Kondensationskatalysator als Bestandteil der Komponente (B) temperaturlabil und ist die Zersetzung oder Entfernung dieses Kondensationskatalysators nicht erwünscht, so sollte das zu kondensierende Gemisch nur wenig erwärmt werden und nur bei vermindertem Druck destilliert werden.

Die Molmasse des im erfindungsgemäß hergestellten Beschichtungsmittel vorhandenen Kondensationsproduktes wird durch einen geringen Gehalt an Lösungsmitteln oder durch verstärktes Ausdestillieren gegen Ende der Umsetzung bei der Umsetzung der Komponenten (A) bis (D) erhöht.

Wenn die erfindungsgemäß hergestellten Beschichtungsmittel innerhalb kurzer Zeit bei Raumtemperatur zu klebfreien Filmen trocknen oder aushärten sollen, muß bei einer geringen Molmasse des im Beschichtungsmittel vorhandenen Kondensationsprodukts mehr Kondensationskatalysator zur Verfügung stehen als bei einer hohen Molmasse.

In einer bevorzugten Ausführungsform der Umsetzung der Mischung der Komponenten (A) bis (D) werden durch Verwendung von wenig Lösungsmittel bzw. durch starkes Abdestillieren des Lösungsmittels gegen Ende der Umsetzung hochmolekulare und hochkonzentrierte Harzlösungen hergestellt. Gegen Ende der Umsetzung wird die Temperatur stark erhöht, vorzugsweise auf mindestens 150°C, vorzugsweise unter vermindertem Druck, wobei der Katalysator ganz oder teilweise desaktiviert oder destillativ entfernt wird. Die Beschichtungsmittel gelieren unter diesen Bedingungen nicht. Sie sind nur noch schwach alkalisch, vorzugsweise mit einer Alkalität entsprechend maximal 100 ppm, insbesondere maximal 50 ppm, Kaliumhydroxid und besitzen einen hohen Feststoffgehalt bis 90 Gewichtsprozent, können auch fast frei von Lösungsmittel sein. Diese ausgezeichnet lagerstabilen Beschichtungsmittel können zu scherstabilen Emulsionen verarbeitet werden oder mit Lösungsmittel beliebig verdünnt werden, ohne ihre Lagerstabilität zu verlieren und trocknen bei Raumtemperatur in kurzer Zeit zu einem klebfreien Film. Eine schwache Alkalität von Beschichtungsmitteln ist für viele Anwendungszwecke erwünscht.

## Beschichtungsmittelemulsionen

Die im erfindungsgemäßen Verfahren herstellbaren Emulsionen sind insbesondere wäßrige Emulsionen, d.h. Emulsionen mit Wasser als kontinuierlicher Phase (O/W-Emulsion). Sie enthalten Wasser vorzugsweise in Mengen von 10 Gewichtsprozent bis 5000 Gewichtsprozent, speziell von 20 Gewichtsprozent bis 500 Gewichtsprozent, jeweils bezogen auf das Gewicht der eingesetzten Komponente (A).

Neben den oben genannten Komponenten enthalten die Emulsionen vorzugsweise mindestens einen Emulgator.

Als anionische Emulgatoren eignen sich besonders:

1. Alkylsulfate, besonders solche mit einer Kettenlänge von 8 bis 18 C-Atomen und Alkylethersulfate mit 8 bis 18 C-Atomen im hydrophoben Rest und 1 bis 40 Ethylenoxid (EO)- bzw. Propylenoxid(PO)-einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese Alkohole oder Alkylphenole auch mit 1 bis 40 EO-Einheiten ethoxyliert sein.

3. Alkali- und Ammoniumsalze von Carbonsäuren mit 8 bis 20 C-atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Alkylpolyglycolether, vorzugsweise solche mit 8 bis 40 EO-Einheiten und Alkylresten von 8 bis 20 C-Atomen.

6. Alkylarylpolyglycolether, vorzugsweise solche mit 8 bis 40 EO-Einheiten und 8 bis 20 C-Atomen in den Alkyl- und Arylresten.

7. Ethylenoxid/Propylenoxid(EO/PO)-Blockcopolymere, vorzugsweise solche mit 8 bis 40 EO- bzw. PO-Einheiten.

8. Fettsäuren mit 6 bis 24 C-Atomen.

9. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.

10. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

11. Salze von primären, sekundären und tertiären Fettaminen mit 8 bis 24 C-Atomen mit Essigsäure, Schwefelsäure, Salzsäure und Phosphorsäuren.

12. Quarternäre Alkyl- und Alkylbenzolammoniumsalze, nämlich die Halogenide, Sulfate, Phosphate und Acetate, insbesondere solche, deren Alkylgruppe 6 bis 24 C-Atome besitzt.

13. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Bevorzugt als Emulgatoren sind nichtionische Emulgatoren, insbesondere die oben unter 5. bis 7. genannten.

Die erfindungsgemäß hergestellten Emulsionen enthalten Emulgatoren vorzugsweise in Mengen von 0,5 Gewichtsprozent bis 15 Gewichtsprozent, speziell von 1 Gewichtsprozent bis 6 Gewichtsprozent, jeweils bezogen auf das Gewicht der eingesetzten Komponente (A).

Die erfindungsgemäß hergestellten Emulsionen können nach allen Verfahren hergestellt werden, nach denen auch bisher Siliconemulsionen hergestellt worden sind. Sie werden vorzugsweise hergestellt nach dem nachstehend aufgeführten Verfahren:

Aus den oben beschriebenen, im erfindungsgemäßen Verfahren hergestellten Lösungen der Umsetzungsprodukte der Komponenten (A) bis (D) (Siliconharzlösungen) können mit Wasser und in Anwesenheit von Emulgator Emulsionen hergestellt werden. Diese Lösungen enthalten noch organisches Lösungsmittel oder ein Gemisch von organischen Lösungsmitteln.

Vorzugsweise wird der Emulgator bzw. das Emulgatorgemisch in der Siliconharzlösung dispergiert, unter Rühren wenig Wasser zugegeben, so daß ein sehr viskoses Konzentrat entsteht, welches anschließend mit Wasser auf den gewünschten Feststoffgehalt verdünnt wird.

Vorzugsweise werden in diesem Verfahren Siliconharzlösungen mit hohem Feststoffgehalt eingesetzt, damit der Gehalt an organischem Lösungsmittel in der Emulsion gering ist; die eingesetzte Siliconharzlösung enthält vorzugsweise mindestens 50 Gewichtsprozent, insbesondere mindestens 70 Gewichtsprozent, speziell mindestens 80 Gewichtsprozent an Feststoffen, jeweils bezogen auf das Gesamtgewicht der Lösung.

Vorzugsweise enthalten die nach dem vorstehenden Verfahren hergestellten Emulsionen maximal 15 Gew.-%, insbesondere maximal 5 Gew.% an organischen Lösungsmitteln.

Vorzugsweise enthalten die Emulsionen maximal 5 Gew.%, insbesondere gar keine aromatischen Lösungsmittel.

Die erfindungsgemäß hergestellten Beschichtungsmittelemulsionen sind äußerst scherstabil und bilden auf dem jeweiligen Substrat in kürzester Zeit bei Raumtemperatur klebfreie Filme.

Die Beschichtungsmittel, also insbesondere die Lösungen, Dispersionen und Emulsionen, sind über längere Zeit bei Raumtemperatur lagerfähig, ohne daß sich ihre Eigenschaften wesentlich ändern.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20°C ;

d) alle Viskositäten bei 25°C gemessen;

e) alle Flammpunkte gemäß DIN (Deutsche Industrie- Norm) 53 213 bestimmt;

f) **Harz A:** Ein Si-O-C gebundene Methoxy- und Butoxygruppen enthaltendes Cohydrolysat von Phenyltrichlorsilan (2 Molteile) und Dimethyldichlorsilan (1 Molteil), welches eine Viskosität von 120 mm$^2$s$^{-1}$ bei 25°C besitzt;

6

g) **Gemisch B:** Eine Mischung von 700 Gewichtsteilen **Harz A** mit 20 Gewichtsteilen Methyltriethoxysilan;

h) **Silan C:** Mischung von 940 Gewichtsteilen Phenyltriethoxysilan und 429 Gewichtsteilen Dimethyldiethoxysilan;

i) **BTAH:** Benzyltrimethylammoniumhydroxid, eingesetzt als 40 gewichtsprozentige Lösung in Methanol;

j) **Zn:** Zinkpigment mit der Bezeichnung Zn 615, käuflich bei der Fa. Stolberger Zincoli GmbH, D-5190 Stolberg;

k) **Al:** Aluminiumpigment der Bezeichnung Stapa 2, käuflich bei der Fa. Eckart Werke, D-8510 Fürth.

l) **Emulgator:** Isotridecylalkohol-(16)-polyglycolether

## Beispiele

### I. Harzlösungen

### Beispiele 1 bis 10

Zu einer Lösung von **Harz A** in Xylol wurden unter Rühren unterschiedliche Mengen an basischem Kondensationskatalysator und gegebenenfalls zusätzlich soviel Wasser gegeben, daß ausreichende Hydrolyse der Alkoxygruppen gewährleistet ist.

Anschließend wurde auf die Rückflußtemperatur erhitzt, worauf die Mischung schlagartig klar wurde. Anschließend wurden die Lösungsmittel (Methanol bzw. Ethanol, ggf. Wasser, Butanol und Xylol) teilweise abdestilliert, der Rückstand filtriert und die Lösung mit Xylol auf den gewünschten Festgehalt eingestellt. Die Destillation werde bei vermindertem Druck (4 bis 5 kPa) durchgeführt.

Im Beispiel 4 wurde statt Harz A die in der Tabelle angegebene Menge an **Gemisch B,** in Beispiel 5 statt Harz A die in der Tabelle angegebene Menge an **Silan C** eingesetzt.

Jeweils 15 g der Harzlösungen gemäß den Beispielen 2 bis 4 und 6 wurden mit jeweils 5 g **Zn** bzw. 5 g **Al** pigmentiert und 2 Wochen lang bei 60 °C im Trockenschrank gelagert. Während dieser Lagerzeit gelierten die pigmentierten Lösungen nicht. Auch war keine Wasserstoffentwicklung in der Lösung zu erkennen.

Weitere Daten sind den nachfolgenden Tabellen **1** und **2** zu entnehmen.

## Tabelle 1:

| Beispiel Nr. | Kataly-sator | Einsatzmengen in g | | | | Festgehalt in % | Ausbeute in g | Alkalität in ppm KOH |
|---|---|---|---|---|---|---|---|---|
| | | Harz A | Xylol | Kataly-sator | Wasser | | | |
| 1 | BTAH | 720 | 589 | 17,3 | 56 | 50 | - | 19 100 |
| 2 | BTAH | 720 | 589 | 25,9 | 28 | 50 | 1198 | 2 700 |
| 3 | BTAH | 720 | 589 | 34,6 | 28 | 50 | 1122 | 3 500 |
| 4 | BTAH | 720 Gemisch B | 589 | 25,9 | 28 | 50 | 1170 | 2 800 |
| 5 | BTAH | 1369 Silan C | 589 | 25,9 | 200 | 50 | 1258 | 2 000 |
| 6 | BTAH | 720 | 480 | 26,0 | 28 | 65 | 852 | 3 330 |
| 7 | BTAH | 720 | 480 | 13,0 | 28 | 70 | - | 1 860 |
| | | | | | | 65 | - | 1 770 |
| 8 | BTAH | 720 | 480 | 6,5 | 28 | 70,8 | 740 | 840 |
| | | | | | | 65 | - | 790 |
| 9 | BTAH | 900 | 600 | 4,1 | 35 | 70 | 1041 | 420 |
| | | | | | | 55 | | 390 |
| 10 | BTAH | 900 | 600 | 2,0 | 35 | 75 | 926 | 219 |
| | | | | | | 70 | - | 200 |
| | | | | | | 65 | - | 179 |

## Tabelle 2:

| Beispiel Nr. | Viskosität in $mm^2/s$ | | Aussehen | Flammpunkt in °C (DIN 53213) | Trockenzeit[a] in min |
|---|---|---|---|---|---|
| | nach Herstellung | nach 1 1Woche bei Raumtemperatur | | | |
| 1 | - | - | klar | - | >3d |
| 2 | 11,0 | 8,8 | klar | 27 | 20 |
| 3 | 12,3 | 11,9 | klar | 28(28)[b] | 15 |
| 4 | 10,2 | 9,0 | klar | 27 | 12 |
| 5 | 20,5 | 7,2 | klar | 28(27)[b] | 30 |
| 6 | 167 | 135 | leicht trüb | - | 6 |
| 7 | 458 | 596 | - | - | 6 |
| | 82 | 81 | - | - | 7 |
| 8 | 397 | 423 | leicht trüb | - | 9 |
| | 66 | 58 | - | - | 10 |
| 9 | 112 | 108 | leicht trüb | - | ca.15[c] |
| | 39 | - | - | - | ca.15[c] |
| 10 | 369 | - | leicht trüb | - | ca.15[c] |
| | 66 | 74 | - | - | ca.15[c] |
| | 33 | - | - | - | ca.15[c] |

Fußnoten zu den Tabellen 1 und 2:

a) Filme mit 60 μm-Rakel auf Eisenblech auftragen

b) Wiederholung der Messung nach Lagerung (3 Wochen bei Raumtemperatur)

c) Filme noch ganz leicht klebrig

Je eine Probe der gemäß den Angaben in diesen Tabellen 1 Woche bei Raumtemperatur gelagerten Lösungen wurden insgesamt drei Monate bei Raumtemperatur gelagert. Bei keiner dieser Proben war eine wesentliche Viskositätsänderung zwischen einwöchiger und dreimonatiger Lagerung festzustellen.

**Beispiel 11**

Ein Gemisch aus 900 g Harz A und 300 g Xylol wurden mit 35 g Wasser und 4,6 g BTAH versetzt. Dann wurde 1 Stunde zum Rückfluß erwärmt. Die Mischung wurde dabei schlagartig klar.

Anschließend destillierte man bei Normaldruck 281 g flüchtige Bestandteile ab. Die Temperatur der Reaktionsmischung stieg dabei bis auf 157°C. Unter diesen Bedingungen wurde der Katalysator desaktiviert. Die resultierenden Zerfallsprodukte (vor allem Trimethylamin) wurden dabei zum größten Teil aus dem System entfernt. Die Reaktionsmischung gelierte bei diesen Bedingungen nicht.

Nach der Umsetzung wurde mit Butanol auf eine Harzlösung mit 80 Gew.-% Festgehalt eingestellt. Die Harzlösung enthielt dann ca. 5 Gew.-% Butanol und ca. 15 % Xylol und wies eine Alkalität bestimmt als KOH von 5 ppm und eine Viskosität von 1060 mm²/s auf. Die Harzlösung war sowohl bei Raumtemperatur als auch nach 2-wöchiger Lagerung bei 60°C viskositätsstabil.

Die Harzlösung trocknete nach 10 min. bei RT auf einem Substrat zu einem klebfreien Film.

**II. Harzemulsionen**

**Beispiel 12**

Aus einer gemäß Beispiel 10 hergestellten Siliconharzlösung mit einem Feststoffgehalt (Gewichtsanteil der Summe der Gewichte von Komponente (A) und Komponente (B)) von 75 %, 6 Gewichtsprozent bezogen auf die Komponente (A) an Emulgator und wenig Wasser wurde ein Konzentrat hergestellt, welches anschließend mit weiterem Wasser auf den gewünschten Feststoffgehalt von 50 Gewichtsprozent eingestellt wurde. Ohne weitere Lagerung trocknete die so erhaltene, äußerst scherstabile Emulsion in kurzer Zeit nach Auftragen auf einem Substrat zu einem klebfreien Film.

In dünner Schicht aufgetragen härtete ein Film in ca. 5 Stunden klebfrei aus.

**Beispiel 13**

Aus der gemäß Beispiel 11 hergestellten Siliconharzlösung wurde gemäß Beispiel 12 eine Emulsion mit einem Feststoffgehalt von 50 Gewichtsprozent hergestellt. Die Emulsion war äußerst scherstabil und trocknete nach 10 Minuten zu einem klebfreien Film.

**Patentansprüche**

1. Verfahren zur Herstellung von Beschichtungsmitteln, bei dem eine Mischung von
   (A) mindestens einem Siliconharz der Formel

   $R_x(OR')_y SiO_{(4-x-y)/2}$     (1),

   worin bedeuten

**R** gleiche oder verschiedene, gegebenenfalls substituierte $C_1$- bis $C_{18}$-Kohlenwasserstoffreste,

**R'** gleiche oder verschiedene $C_1$- bis $C_4$-Alkylreste oder Wasserstoffatome,

**x** durchschnittlich einen Wert von 1,1 bis 1,9 und die Summe von **x+y** maximal einen Wert von 2,5, und/oder mindestens einem Silan der Formel

$$R_aSi(OR')_{(4-a)} \qquad (2),$$

wobei **R** und **R'** die vorstehend angegebenen Bedeutungen haben und

**a** durchschnittlich einen Wert von 1,1 bis 1,9 besitzt, wobei in den Formeln (1) und (2) mindestens 30 Prozent der Reste **R** Phenylreste und/oder Tolylreste sind,

(B) Tetra($C_1$- bis $C_{12}$-kohlenwasserstoff)ammoniumhydroxid und/oder Tetra($C_1$- bis $C_{12}$-kohlenwasserstoff)phosphoniumhydroxid und/oder deren Silanolate, in einer Gesamtmenge von $2 \times 10^{-3}$ Mol bis 0,5 Mol pro kg der Komponente (A) als basischer Kondensationskatalysator,

(D) organischem Lösungsmittel und

gegebenenfalls (C) Wasser

umgesetzt wird,

wobei der Anfangsgehalt der Mischung an Silanolgruppen mindestens 0,3 Gew.-% des Gewichts der Komponente (A) beträgt oder Komponente (A) neben gegebenenfalls vorhandenen Silanolgruppen mindestens so viele an Sigebundene Alkoxygruppen aufweist, daß zu Beginn der Umsetzung in der Mischung durch Reaktion mit Wasser ein Gehalt an Silanolgruppen erreicht wird, der mindestens 0,3 Gew.-% der Komponente (A) entspricht, wobei das bei der Umsetzung entstehende Alkanol entfernt wird und wobei die Beschichtungsmittel frei von Carbonsäuren und deren Salzen sind.

2. Verfahren nach Anspruch 1, wobei die Mischung nach der Umsetzung in Anwesenheit von Emulgatoren zu einer Emulsion oder Dispersion verarbeitet wird, mit der Maßgabe, daß, wenn als Emulgatoren quarternäre Alkylammoniumsalze und/oder Alkylbenzolammoniumsalze eingesetzt werden, die Halogenide, Sulfate, Phosphate und Acetate zum Einsatz kommen.

3. Verfahren nach Anspruch 1 oder 2, wobei der Katalysator in der Mischung gegen Ende der Umsetzung teilweise oder ganz entfernt oder zersetzt wird.

4. Verfahren gemäß einem der Ansprüche 1 bis 3, wobei die Mischung nach der Umsetzung zusätzlich mit mindestens einem Pigment aus der Gruppe Zink, Aluminium, Eisenoxid und Ruß versetzt wird.

**Claims**

1. Process for the preparation of coating compositions in which a mixture of
    (A) at least one silicone resin of the formula

$$R_x(OR')_ySiO_{(4-x-y)/2} \qquad (1),$$

in which
    **R** are identical or different, optionally substituted $C_1$- to $C_{18}$-hydrocarbon radicals,
    **R'** are identical or different $C_1$- to $C_4$-alkyl radicals or hydrogen atoms,
    **x** is on average a value of from 1.1 to 1.9 and the sum **x+y** is at most a value of 2.5, and/or
at least one silane of the formula

$$R_aSi(OR')_{(4-a)} \qquad (2),$$

where **R** and **R'** are as defined above, and
    **a** on average has a value of from 1.1 to 1.9,
where, in the formulae (1) and (2), at least 30 percent of the radicals **R** are phenyl radicals and/or tolyl radicals,
    (B) tetra($C_1$- to $C_{12}$-hydrocarbon)ammonium hydroxide and/or tetra($C_1$- to $C_{12}$-hydrocarbon)phosphonium hydroxide and/or silanolates thereof, in a total amount of from $2 \times 10^{-3}$ mol to 0.5 mol per kg of component (A) as basic condensation catalyst,

(D) organic solvent and
optionally (C) water,
is reacted,
where the initial silanol group content in the mixture is at least 0.3% by weight, based on component (A), or where component (A) contains at least sufficient Si-bonded alkoxy groups, in addition to any silanol groups present, so that a content of silanol groups corresponding to at least 0.3% by weight of component (A) is achieved through reaction with water at the beginning of the reaction in the mixture, where the alkanol formed during the reaction is removed and
where the coating composition is free from carboxylic acids and salts thereof.

2. Process according to Claim 1, in which the mixture is converted, after the reaction in the presence of emulsifiers, to an emulsion or dispersion, with the proviso that, if quaternary alkylammonium salts and/or alkylbenzeneammonium salts are employed as emulsifiers, the halides, sulphates, phosphates and acetates are used.

3. Process according to Claim 1 or 2, in which all or some of the catalyst in the mixture is removed or decomposed toward the end of the reaction.

4. Process according to any one of Claims 1 to 3, in which at least one pigment from the group comprising zinc, aluminium, iron oxide and carbon black is additionally added to the mixture after the reaction.

**Revendications**

1. Procédé de préparation de préparation d'agents de revêtement, selon lequel on fait réagir un mélange de
(A) au moins une résine silicone de formule

$$R_x(OR')_ySiO_{(4-x-y)/2} \qquad (1),$$

dans laquelle
les R représentent des restes hydrocarbonés en $C_1$-$C_{18}$ identiques ou différents, éventuellement substitués,
les R' représentent des restes alkyle en $C_1$-$C_4$ identiques ou différents ou des atomes d'hydrogène,
x représente en moyenne une valeur de 1,1 à 1,9 et la somme x + y a au maximum une valeur de 2,5, et/ou au moins un silane de formule

$$R_aSi(OR')_{(4-a)} \qquad (2),$$

dans laquelle R et R' ont les significations données précédemment, et
a possède en moyenne une valeur de 1,1 à 1,9,
au moins 30 % des restes R dans les formules (1) et (2) étant des restes phényle et/ou tolyle,
(B) un hydroxyde de tétra(hydrocarbure en $C_1$-$C_{12}$)ammonium et/ou un hydroxyde de tétra-(hydrocarbure en $C_1$-$C_{12}$)phosphonium et/ou leurs silanolates, en une quantité totale de $2 \times 10^{-3}$ mole à 0,5 mole par kg de constituant (A), en tant que catalyseur de condensation basique,
(D) un solvant organique et
éventuellement (C) de l'eau,
la teneur initiale du mélange en groupes silanol étant d'au moins 0,3 % en masse de la masse du constituant (A), ou le constituant (A) contenant, en plus des groupes silanol éventuellement présents, au moins assez de groupes alcoxy liés au Si pour que l'on obtienne au début de la réaction dans le mélange, par réaction avec l'eau, une teneur en groupes silanol qui correspond à au moins 0,3 % en masse du constituant (A), l'alcanol formé lors de la réaction étant éliminé, et les agents de revêtement ne contenant pas d'acides carboxyliques ni de sels de ces acides.

2. Procédé selon la revendication 1, dans lequel on transforme le mélange après la réaction en une émulsion ou une dispersion en présence d'émulsionnants, sous réserve que, lorsque l'on utilise comme émulsionnants des sels quaternaires d'alkylammonium et/ou d'alkylbenzèneammonium, on utilise les halogénures, les sulfates, les phosphates et les acétates.

3. Procédé selon la revendication 1 ou 2, dans lequel le catalyseur est partiellement ou totalement éliminé ou décomposé dans le mélange vers la fin de la réaction.

4. Procédé selon l'une des revendications 1 à 3, dans lequel on ajoute en outre au mélange, après la réaction, au moins un pigment du groupe du zinc, de l'aluminium, des oxydes de fer et du noir de carbone.